# EUROPEAN PATENT APPLICATION

(11) **EP 2 897 252 A1**
(43) Date of publication of application: **22.07.2015**
(21) Application number: 13837379.0
(22) Date of filing: 21.08.2013
(51) Int. Cl.: H02J 7/14, B60K 6/485, B60L 7/10, B60L 11/14, B60R 16/04, H02J 7/16

(54) **VEHICLE, GENERATOR SYSTEM, AND GENERATION METHOD**

(30) Priority: 12.09.2012 JP 2012200389
(71) Applicant: Hino Motors, Ltd., Hino-shi, Tokyo 191-8660 (JP)
(72) Inventor: HYOUDOU, Yoshiyuki, Hino-shi, Tokyo 191-8660 (JP); YAMAGUCHI, Koichi, Hino-shi, Tokyo 191-8660 (JP)
(74) Representative: Skone James, Robert Edmund
(86) International application number: PCT/JP2013/072312
(87) International publication number: WO 2014/041978

(57) **Abstract**

The purpose of the present invention is to charge a battery for supplying power to an electrically-powered auxiliary machine, while achieving lower fuel consumption, lower exhaust gas emissions, and lower noise. In a vehicle (1) having an electrically-powered compressor (15), a battery (13) for supplying power to the electrically-powered compressor (15), and a generator (11) for generating power to charge the battery (13) or power to be supplied to the electrically-powered compressor (15), the drive shaft of the generator (11) is directly coupled to the shaft of the engine (10) or is an integral part of the shaft of the engine (10). The generator (11) is designed to carry out regenerative power generation during deceleration or during driving on a down grade.

## Description

### {Technical Field}

The present invention relates to a vehicle, a generator system, and a generation method.

### {Background Art}

Conventionally, a vehicle equipped with an auxiliary machine such as a refrigeration device may be configured that a part of output of a vehicle driving engine is shared as power for the auxiliary machine, or output of a sub-engine provided additionally to the engine is used as power for the auxiliary machine.

In any configuration, the vehicle driving engine or the sub-engine needs to be stopped in a place, such as on a car ferry, in which generation of exhaust gas is unfavorable. In order to drive the auxiliary machine even when the vehicle driving engine or the sub-engine is stopped, an electric motor for driving the auxiliary machine may be provided on a vehicle additionally. In a case where the vehicle is on the car ferry, for example, power for the auxiliary machine driving electric motor.

As another configuration, PTL 1, for example, discloses that no sub-engine is provided and only an electric motor is provided for driving an auxiliary machine, and that the auxiliary machine driving electric motor is supplied with power from a generator driven by an engine.

### {Citation List}

### {Patent Literature}

{PTL 1} JP H08-1347 B

### {Summary of Invention}

### {Technical Problem}

As described above, the auxiliary machine such as the refrigeration device conventionally uses a vehicle driving engine or a sub-engine as a power source. On the contrary, in recent years, it is being considered that an auxiliary machine should be powered electrically

For making an auxiliary machine be powered electrically, a battery for supplying electric power to the auxiliary machine needs to be provided on the vehicle. In addition, in order to charge such a battery, a generator needs to be provided on the vehicle. However, such a generator cannot achieve reduction of fuel consumption, reduction of gas emissions, and reduction of noise emissions if it is driven by a vehicle driving engine or a sub-engine.

The present invention has been achieved under such circumstances, and an object of the present invention is to provide a vehicle, a generator system, and a generation method enabling to achieve reduction of fuel consumption, reduction of gas emissions, and reduction of noise emissions and enabling to obtain electric power for charging a battery which supplies electric power to an electric-powered auxiliary machine or obtain electric power to be supplied to the auxiliary machine.

### {Solution to Problem}

A vehicle according to the present invention comprises an electric-powered auxiliary machine, a battery which supplies electric power to the auxiliary machine, and a generator which generates electric power for charging the battery or electric power to be supplied to the auxiliary machine. A driving shaft of the generator is joined directly to a shaft of an engine or is in common with the shaft of the engine, and the generator performs regenerative generation during deceleration or during running on a downward slope.

Maximum electric power to be generated by the generator is, for example, preferably approximately equal to maximum electric power to be consumed by the auxiliary machine. Alternatively, horsepower of the generator regarded as an electric motor may be one seventh or lower of horsepower of the engine. Since the generator is not used for performing operations of a hybrid car, no electric power is preferably supplied from the battery to the generator.

A generator system according to the present invention is provided on a vehicle including an electric-powered auxiliary machine and a battery supplying electric power to the auxiliary machine and generates electric power for charging the battery or electric power to be supplied to the auxiliary machine. A driving shaft thereof is joined directly to a shaft of an engine or is in common with the shaft of the engine, and regenerative generation is performed during deceleration or during running on a downward slope.

A method for generating electric power on a vehicle including an electric-powered auxiliary machine and a battery for supplying electric power to the auxiliary machine to charge a battery or supply the electric power to an auxiliary machine, comprising: a step of performing regenerative generation during deceleration or during traveling on a downward slope by a generator whose driving shaft is joined directly to a shaft of an engine or is in common with the shaft of the engine.

A method for generating electric power generation method according to the present invention is to generate electric power on a vehicle including an electric-powered auxiliary machine and a battery for supplying electric power to the auxiliary machine to charge the battery or supply the electric power to the auxiliary machine, comprising a step of performing regenerative generation during deceleration or during running on a downward slope by a generator whose driving shaft is joined directly to a shaft of an engine or is in common with the shaft of the engine.

### {Advantageous Effects of Invention}

According to the present invention, electric power for charging a battery supplying electric power to an electric-powered auxiliary machine or electric power to be supplied to the auxiliary machine can be obtained with achieving reduction of fuel consumption, reduction of gas emissions, and reduction of noise emissions. According to the present invention, a generator for charging the battery can be attached to an existing vehicle with no modification or with simple modification.

### {Brief Description of Drawings}

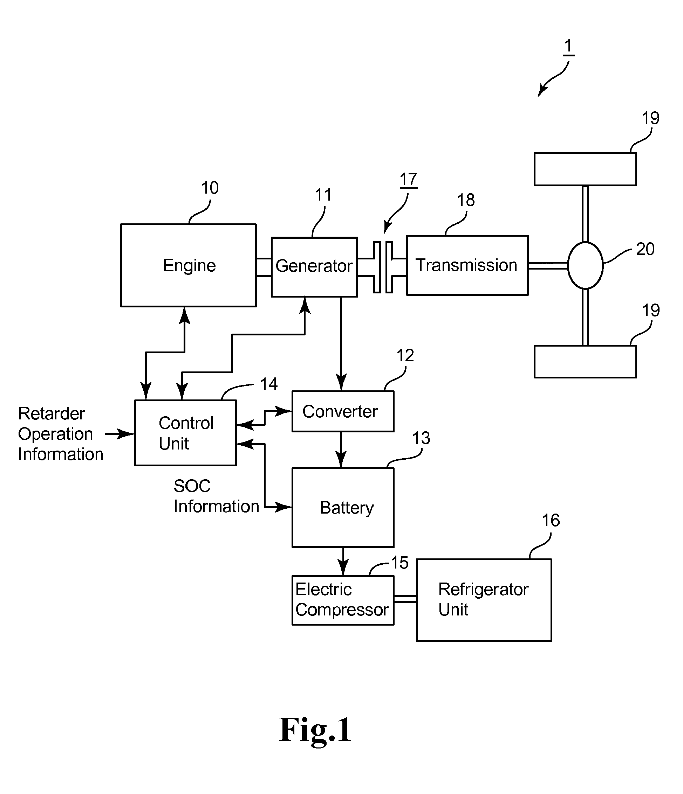

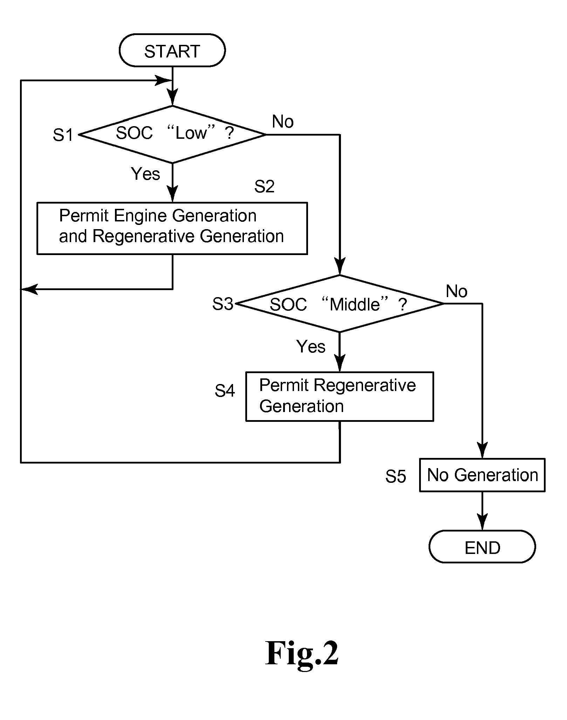

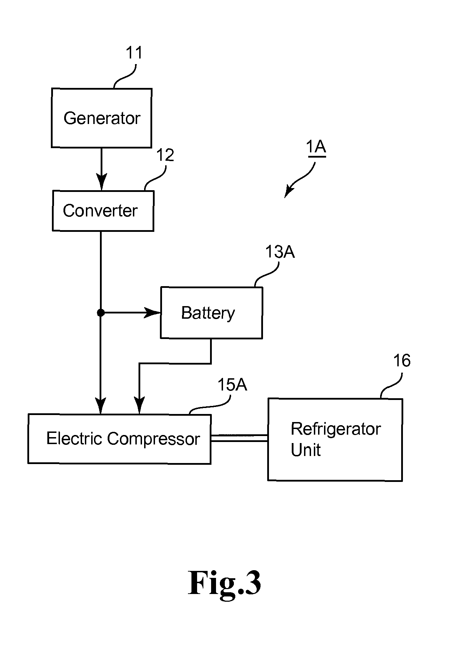

{Fig. 1} Fig. 1 illustrates a configuration of a main part of a vehicle according to a first embodiment of the present invention.
{Fig. 2} Fig. 2 is a flowchart describing operations of a control unit in Fig. 1.
{Fig. 3} Fig. 3 illustrates a configuration of a main part of a vehicle according to a second embodiment of the present invention.

### {Description of Embodiments}

### [First Embodiment]

A vehicle 1 according to a first embodiment of the present invention will be described with reference to Fig. 1. Fig. 1 illustrates a configuration of a main part of the vehicle 1 and illustrates only a selected configuration according to the first embodiment of the present invention.

The vehicle 1 includes as main components an engine 10, a generator 11, a converter 12, a battery 13, a control unit 14, an electric compressor 15, and a refrigerator unit 16. The vehicle 1 further includes as conventional components a clutch 17, a transmission 18, driving wheels 19, a differential gear 20, and the like.

An example of the engine 10 is a diesel engine. Assuming the vehicle 1 being a heavy-duty truck, the engine 10 is, e.g., in a 380-horsepower class. To an output shaft of the engine 10, an input shaft of the generator 11 is joined. Alternatively, the output shaft of the engine 10 may be a common shaft member with the input shaft of the generator 11.

An example of the generator 11 is an alternating-current generator. The input shaft of the generator 11 is the output shaft of the engine 10. Alternatively, the input shaft of the generator 11 and the output shaft of the engine 10 may be the common shaft member as described above. The generator 11 also has an output shaft to be input into the clutch 17. That is, the output shaft of the generator 11 also functions as the output shaft of the engine 10.

The maximum electric power to be generated by the generator 11 is preferably at least the maximum electric power to be consumed by the electric compressor 15 or higher. However, when the electric power to be generated by the generator 11 increases, generation torque of the generator 11 also increases along with this. Since the generation torque of the generator 11 becomes friction for the engine 10, the electric power to be generated by the generator 11 is preferably set to the minimum necessary. Hence, the maximum electric power to be generated by the generator 11 is preferably approximately equal to the maximum electric power to be consumed by the electric compressor 15. Since the maximum electric power to be consumed by the electric compressor 15 is about 5 kilowatts to 6 kilowatts, the maximum electric power to be generated by the generator 11 may be equivalent to this.

Alternatively, in a different viewpoint, a general-purpose electric motor for use in assisting an engine in a hybrid car more compact than the vehicle 1 may be used as the generator 11 to save the effort of new development and manufacture of the aforementioned generator 11. Since the vehicle 1 is not a hybrid car, assist of the engine 10 by an electric motor is not performed. Thus, horsepower of an electric motor to be used as the generator 11 of the vehicle 1 may be lower than horsepower of the engine 10. For example, in a case in which the engine 10 of the vehicle 1 is a general-purpose 380-horsepower engine, a general-purpose 40-kilowatt-class electric motor can be used as the electric motor for the more compact hybrid car than the vehicle 1. In this case, when 0.746 kilowatts is converted into 1 horsepower, the 40-kilowatt-class electric motor has about 54 horsepower. That is, the horsepower of the general-purpose electric motor to be used as the generator 11 is one seventh or lower of the horsepower of the engine 10. Meanwhile, if the vehicle 1 having the 380-horsepower engine 10 was constructed as a hybrid car, an approximately 270-horsepower (approximately 200-kilowatt) electric motor would be required.

The generation capacity of the 40-kilowatt-class generator 11 is excessive in comparison to the maximum electric power to be consumed by the electric compressor 15 (5 kilowatts to 6 kilowatts). However, even in this case, the friction caused by the generation torque of the generator 11 is slight for the horsepower of the engine 10.

On the other hand, since the 40-kilowatt-class generator 11 may have sufficient potential for supplying electric power to the battery 13, the generator 11 can fully charge the battery 13 in a very short time. Accordingly, the 40-kilowatt-class generator 11 easily keeps an SOC (state of charge) of the battery 13 in a good state only with regenerative generation without consuming fuel.

Further, the electric motor for the hybrid car is originally designed to have a configuration in which the output shaft of the engine 10 and the input shaft of the generator 11 are integrated. Thus, the electric motor for the hybrid car can be used as the generator 11 according to the embodiment of the present invention without particular specification changes. Accordingly, time and cost required for design and manufacture can be reduced significantly.

The converter 12 converts alternating-current electric power generated by the generator 11 into direct-current electric power and supplies it to the battery 13. That is, the converter 12 functions as a rectifier disposed between the generator 11 and the battery 13. Meanwhile, since the vehicle 1 does not perform operations as a hybrid car, the converter 12 does not supply electric power from a side of the battery 13 to a side of the generator 11. More specifically, a circuit of the converter 12 is constituted by a diode and the like so that a current direction may be one way from the side of the generator 11 to the side of the battery 13.

The battery 13 is a battery for supplying electric power to the electric compressor 15 as an auxiliary machine. Thus, the battery 13 differs from a conventional battery for supplying electric power to a starter and electric components of the vehicle 1. For example, the battery 13 is a lithium battery or the like for use in a hybrid car and the like.

The battery 13 is supplied with electric power for charging from the generator 11 via the converter 12. The capacity of the battery 13 is preferably one enabling electric power to be supplied to the electric compressor 15 for several consecutive hours during traveling carried by a car ferry or the like. However, in a case in which long-time traveling carried by a car ferry or the like is not taken into consideration, the capacity of the battery 13 may be smaller since electric power is supplied from the generator 11 to the battery 13 even when the electric compressor 15 is being driven.

The control unit 14 may be realized by, for example, an information processing unit, in which the information processing unit executes a predetermined program installed in advance to cause the information processing unit to fulfill a function of the control unit 14. For example, the information processing unit includes a memory, a CPU (Central Processing Unit), an input/output port, and the like. The CPU of the information processing unit retrieves and executes a control program as the predetermined program from the memory or the like. This causes the information processing unit to fulfill the function of the control unit 14. It is to be noted that an ASIC (Application Specific Integrated Circuit), a microprocessor (microcomputer), a DSP (Digital Signal Processor), or the like may be used instead of the aforementioned CPU.

The electric compressor 15 is a unit for circulating a refrigerant cooling an inside of a refrigerator of the refrigerator unit 16 in a refrigerant pipe of the refrigerator unit 16.

The refrigerator unit 16 has the refrigerator mounted on the back of the vehicle 1. The inside of the refrigerator is kept at a constant temperature below freezing by a thermostat.

The clutch 17 may be one which is engaged/disengaged by by means of driver's pedal operation or another which is controlled to be engaged/disengaged automatically by an ECU (Electric Control Unit) or the like which controls the transmission 18 to fit with the driver's transmission operation to the transmission 18. Here, the clutch 17 may be the former or the latter. As for the clutch 17, an input side thereof is connected to the output shaft of the generator 11 (that is, the output shaft of the engine 10) while an output side thereof is connected to an input side of the transmission 18.

As for the transmission 18, the input side thereof is connected to the clutch 17 while an output side thereof is connected to the differential gear 20 of the driving wheels 19.

The vehicle 1 configured as above has the auxiliary machine, in which the refrigerator unit 16 is cooled by the electric compressor 15, and travels by means of the engine 10. The electric compressor 15 is supplied with electric power from the battery 13 and is operated. Meanwhile, in the example of the vehicle 1, since a direct-current electric motor is used as the electric compressor 15, direct-current electric power is directly supplied from the battery 13 to the electric compressor 15. In a case in which an alternating-current electric motor is used as the electric compressor 15, an inverter is additionally disposed between the battery 13 and the electric compressor 15.

Generation by the generator 11 is performed when the engine 10 generates power and the vehicle 1 is running by means of this power, when the engine 10 generates no power but the vehicle 1 is decelerating, or when the engine 10 generates no power but the vehicle 1 is running on a downward slope. Also, when the vehicle 1 is decelerating or is traveling on a downward slope, the generation torque of the generator 11 functions as a braking force for the vehicle 1. That is, the generator 11 also functions as a retarder for the vehicle 1.

Although generation of the generator 11 by means of power of the engine 10 is not high friction for the engine 10 as described above, it is preferable to perform regenerative generation without consuming fuel as much as possible. To do so, the control unit 14 controls the engine 10, the generator 11, the inverter 12, and the battery 13 based on retarder operation information and SOC information of the battery 13 so that the regenerative generation may be performed as much as possible. Meanwhile, the retarder operation information is information for informing the control unit 14 that a driver has operated a not-illustrated retarder operation lever.

Next, operations of the control unit 14 will be described with reference to a flowchart in Fig. 2. In the flowchart in Fig. 2, a condition for "START" is a condition in which the vehicle 1 is running, and in which the aforementioned information processing unit executes the predetermined program to cause this information processing unit to fulfill the function of the control unit 14. When this condition for "START" is satisfied, the flow proceeds to step S1. Meanwhile, the flow from "START" to "END" is a flow for one cycle, and in a case in which the condition for "START" is satisfied when the flow has proceeded to "END", the flow starts again.

In step S1, the control unit 14 refers to the SOC information of the battery 13 and determines whether or not a value representing the SOC is "low." This "value representing the SOC" can be defined by a value representing the charging amount of the battery 13, for example. For example, in a case in which the lower limit value to the upper limit value of the charging amount of the battery 13 is 0% to 100%, the value representing the SOC is defined as "low" when the charging amount is 0% to 10%, the value representing the SOC is defined as "middle" when the charging amount is 11% to 90%, and the value representing the SOC is defined as "high" when the charging amount is 91% to 100%.

When the SOC is "low," the battery 13 needs to be charged immediately, and the battery 13 thus needs to do so. When the SOC is "middle," the battery 13 can be charged but is in a non-emergency situation. When the SOC is "high," the battery 13 is in a fully charged state and cannot be charged. Meanwhile, since the range of the charging amount when the SOC is "middle" is wider than that when the SOC is "low" or "high," the SOC is often in the "middle" state. Also, in general, the state in which the SOC is "middle" is regarded as a state in which the SOC is in a good state.

When it is determined in step S1 that the value representing the SOC is "low," the flow proceeds to step S2. On the other hand, when it is determined in step S1 that the value representing the SOC is not "low," the flow proceeds to step S3.

In step S2, the control unit 14 permits both generation performed by driving of the generator 11 based on power that the engine 10 generates and regenerative generation performed based on the retarder operation information during deceleration or on a downward slope when the engine 10 does not generate power. In other words, in a situation in which the engine 10 generates power such as when the vehicle 1 is running at constant speed or is accelerating, generation performed by active driving of the generator 11 through fuel consumption by the engine 10 is carried out. On the other hand, in a situation in which the engine 10 does not consume fuel and does not generate power such as when the vehicle 1 is decelerating or is traveling on a downward slope, regenerative generation is carried out. In this manner, in step S2, since the battery 13 is charged almost continuously no matter which situation the vehicle 1 is in, the charging amount of the battery 13 increases promptly.

In step S3, the control unit 14 refers to the SOC information of the battery 13 and determines whether or not the value representing the SOC is "middle." When it is determined in step S3 that the value representing the SOC is "middle," the flow proceeds to step S4. On the other hand, when it is determined in step S3 that the value representing the SOC is not "middle," the flow proceeds to step S5.

In step S4, the control unit 14 permits the regenerative generation performed based on the retarder operation information during deceleration or on a downward slope when the engine 10 does not generate power. Thus, the regenerative generation is carried out during deceleration or on a downward slope when the engine 10 does not generate power. On the other hand, the generation by active driving of the generator 11 by the engine 10 is not carried out. Accordingly, since the battery 13 is charged without using power of the engine 10, charging can be performed while achieving reduction of fuel consumption, reduction of gas emissions, and reduction of noise emissions.

In step S5, the control unit 14 does not perform generation and ends the processing (END).

As described above, the driving shaft of the generator 11 is joined directly to the shaft of the engine 10 or is in common with the shaft of the engine 10, and the generator 11 performs the regenerative generation with no fuel consumption during deceleration or during traveling on a downward slope when the SOC of the battery 13 is "middle" as in step S4 in Fig. 2. Accordingly, the battery 13 can be charged while achieving reduction of fuel consumption, reduction of gas emissions, and reduction of noise emissions.

Further, the horsepower of the generator 11 regarded as an electric motor is much smaller than the horsepower of the engine 10 (the maximum generation electric power which is equal to the maximum electric power to be consumed by the auxiliary machine or the horsepower which is one seventh or less of the horsepower of the engine 10). Thus, even in the case in which the generation is carried out by driving of the generator 11 based on power that the engine 10 generates as in step S2 in Fig. 2, load required for the generation of the engine 10 is extremely low since the generator 11 is small. This can also reduce fuel consumed for generation, exhaust gas emitted for generation, and noise emitted for generation.

Further, in the generator 11 whose horsepower when the generator 11 is regarded as an electric motor is about one seventh of the horsepower of the engine 10 (for example, the engine 10 has 380 horsepower, and the generator 11 has 54 horsepower), the percentage at which the generator 11 becomes friction for the engine 10 is kept low, and at the same time, since the generation electric power is higher than the maximum electric power to be consumed by the electric compressor 15, the SOC of the battery 13 is kept in a good state (that is, a state in which the SOC is "middle") easily only by the regenerative generation with no fuel consumption.

Still further, the size of the generator 11 is much smaller than the size of the engine 10. Thus, the generator 11 can be attached to an existing vehicle with simple modification or with no modification. For example, when the generator 11 is to be attached to the existing engine 10, a specification change is merely a change of the size of a flywheel housing. Alternatively, even the existing flywheel housing can be used as it is depending on the size of the generator 11. Accordingly, when an existing vehicle is to be changed to the vehicle 1 according to the present invention, time and cost required for design changes and modification can be reduced significantly.

### [Second Embodiment]

A vehicle 1A according to a second embodiment of the present invention will be described with reference to Fig. 3. The vehicle 1A according to the second embodiment partially differs from the vehicle 1 according to the first embodiment. Hereinbelow, different parts of the vehicle 1A from the vehicle 1 will be described mainly, and description of common parts of the vehicle 1A to the vehicle 1 will be omitted.

The vehicle 1A has different connection of the converter 12, a battery 13A, an electric compressor 15, and the refrigerator unit 16 from that of the vehicle 1. In the vehicle 1A, output electric power of the converter 12 is supplied to the battery 13A and is also supplied directly to the electric compressor 15. In this configuration, the output electric power of the converter 12 causes the battery 13A to be charged and also causes the electric compressor 15 to be driven directly.

Accordingly, in the vehicle 1A, the battery 13A functions to supply power to the electric compressor 15 in a complemental manner when the generator 11 does not generate power or when power generated by the generator 11 is less than power which drives the electric compressor 15. Hence, the capacity of the battery 13A may be smaller than the capacity of the battery 13.

Also, in the vehicle 1A, even when the SOC of the battery 13A is in a low state, or even when the battery 13A fails, the electric compressor 15A can be driven directly by electric power generated by the generator 11. Accordingly, since the temperature of the refrigerator unit 16 can be kept appropriately even when there is an abnormality in the battery 13A, reliability of refrigerated transport can be improved.

### [Other Embodiments]

The aforementioned embodiments can be altered in various manners without departing from the spirit thereof. For example, the auxiliary machine can be applied not only to the electric compressor 15 and the refrigerator unit 16 but also to various electric auxiliary machines such as electric crane devices, refuse collecting devices, concrete mixers, and air conditioners.

The program to be executed by the information processing unit constituting the control unit 14 may be one stored in a memory or the like of the information processing unit before or after shipment of the control unit 14. Also, part of the program may be stored in the memory or the like of the information processing unit after shipment of the control unit 14. The program stored in the memory or the like of the information processing unit after shipment of the control unit 14 may be one obtained by installing what is stored in a computer-readable recording medium such as a CD-ROM or one obtained by downloading it via a transmission medium such as the Internet.

The program includes not only one that is executable directly by the information processing unit but also one that becomes executable by installation on a hard disk or the like. The program also includes compressed or encrypted one.

In this manner, by causing the information processing unit and the program to fulfill the function of the control unit 14, mass production and specification changes (or design changes) can be coped with in a flexible manner.

It is to be noted that the program executed by a computer may be a program in which processing is performed in chronological order in order of the present description or a program in which processing is performed in parallel or at the required time such as when retrieval is performed.

### {Reference Signs List}

1, 1A ... Vehicle, 10 ... Engine, 11 ... Generator, 12 ... Converter, 13 ... Battery, 14 ... Control unit, 15 ... Electric compressor (part of an auxiliary machine), 16 ... Refrigerator unit (part of the auxiliary machine)

## Claims

1. A vehicle comprising an electric-powered auxiliary machine, a battery which supplies electric power to the auxiliary machine, and a generator which generates electric power for charging the battery or electric power to be supplied to the auxiliary machine, in which;
a driving shaft of the generator is joined directly to a shaft of an engine or in common with the shaft of the engine, and
the generator performs regenerative generation during deceleration or during running on a downward slope.

2. The vehicle according to claim 1, wherein; maximum electric power to be generated by the generator is approximately equal to maximum electric power to be consumed by the auxiliary machine.

3. The vehicle according to claim 1, wherein; horsepower of the generator regarded as an electric motor is one seventh or lower of horsepower of the engine.

4. The vehicle according to any one of claims 1 to 3, wherein; since operations as a hybrid car are not performed, no electric power is supplied from a side of the battery to a side of the generator.

5. A generator system provided on a vehicle including an electric-powered auxiliary machine and a battery which supplies electric power to the auxiliary machine and generates electric power for charging the battery or electric power to be supplied to the auxiliary machine, in which;
a driving shaft thereof is joined directly to a shaft of an engine or is in common with the shaft of the engine, and regenerative generation is performed during deceleration or during running on a downward slope.

6. A method for generating electric power on a vehicle including an electric-powered auxiliary machine and a battery for supplying electric power to the auxiliary machine to charge a battery or supply the electric power to an auxiliary machine, comprising:
a step of performing regenerative generation during deceleration or during traveling on a downward slope by a generator whose driving shaft is joined directly to a shaft of an engine or is in common with the shaft of the engine.
